# EUROPÄISCHE PATENTSCHRIFT

(11) **EP 2 987 227 B1**
(45) Veröffentlichungstag und Bekanntmachung des Hinweises auf die Patenterteilung: **25.09.2019**
(21) Anmeldenummer: 14727369.2
(22) Anmeldetag: 17.04.2014
(51) Int. Cl.: H02K 16/02, H02K 7/116, H02K 21/18, H02K 41/06, H02K 7/18

(54) **ELEKTRISCHE MASCHINE**
ELECTRIC MACHINE
MACHINE ÉLECTRIQUE

(30) Priorität: 17.04.2013 AT 3202013
(43) Veröffentlichungstag der Anmeldung: 24.02.2016
(73) Patentinhaber: Schrödl, Manfred, 7223 Sieggraben (AT)
(72) Erfinder: Schrödl, Manfred, 7223 Sieggraben (AT)
(74) Vertreter: Graschitz, Roland
(86) Internationale Anmeldenummer: PCT/AT2014/000079
(87) Internationale Veröffentlichungsnummer: WO 2014/169308

(56) Entgegenhaltungen:
- EP-A1- 1 393 429
- DE-A1- 19 845 914
- US-A- 4 400 875
- US-A1- 2007 029 888

## Beschreibung

Die Erfindung betrifft eine elektrische Maschine, die aus einem mit Spulen ausgestatteten Maschinenteil und einem rotatorisch oder translatorisch beweglichen Maschinenteil besteht, wobei zwischen dem mit Spulen ausgestatteten Maschinenteil und dem beweglichen Maschinenteil mindestens ein Wälzkörper angeordnet ist, der mindestens zeitweise einen magnetischen Fluss führt, welcher sich über den Wälzkörper zu dem mit Spulen ausgestatteten Maschinenteil rückschließt und um den aktuellen Abrollpunkt des Wälzkörpers am mit Spulen ausgestatteten Maschinenteil ein Drehmoment des Wälzkörpers erzeugt, wobei die elektrische Maschine Formschluss herstellende Modifikationen der Abrollfläche aufweist, wobei die Übertragung des elektromagnetisch erzeugten Drehmomentes der Wälzkörper formschlüssig in den rotatorisch oder translatorisch beweglichen Maschinenteil erfolgt.

Aus der WO 2003/044 927 A1 als auch aus der WO 2002/099 954 A1 ist eine elektrische Maschine, die aus einem mit Spulen ausgestatteten Maschinenteil und einem rotatorisch oder translatorisch beweglichen Maschinenteil besteht, bekannt. Zwischen dem mit Spulen ausgestatteten Maschinenteil und dem beweglichen Maschinenteil sind Wälzkörper angeordnet.

Ebenso ist aus der DE 198 45 914 A1 eine Antriebsvorrichtung, basierend auf einer elektrischen Maschine, wie sie in der WO 2003/044 927 A1 als auch in der WO 2002/099 954 A1 dargelegt ist, bekannt.

Weiters ist aus der US 4 400 875 A eine elektrische Maschine, insbesondere ein Rasierapparat, bekannt, wobei der Querschnitt des Wälzkörpers eine Gleichdicke bildet.

Rotierende oder linear bewegte elektrische Maschinen werden dem Stand der Technik gemäß mit vorzugsweise zwei magnetisch gekoppelten Teilen, nämlich einem Stator und einem Rotor oder einem Stator und einem Translator, ausgeführt, die durch einen Luftspalt, in dem sich auch ein beliebiges flüssiges oder gasförmiges Medium befinden kann, gebaut. Die im Luftspalt auftretende Schubkraft wird durch eine geeignete Bestromung von Spulen, gegebenenfalls in Kombination mit Permanentmagneten, erzeugt. Bekannte Ausführungsformen sind Gleichstrommaschinen, Induktionsmaschinen, Synchronmaschinen, Reluktanzmaschinen. Der Nachteil dieser Anordnungen ist, dass nur die tangential wirkende Kraftkomponente einen Beitrag zur Drehmomentbildung bzw. Vortriebskraftbildung liefert.

Die Aufgabe der Erfindung ist es, eine elektrische Maschine zu schaffen, die einerseits die oben genannten Nachteile vermeidet und die anderseits aufgrund einer neuen Maschinenstruktur wirtschaftlicher arbeitet und/oder betrieben werden kann.

Die Aufgabe wird durch die Erfindung gelöst.

Die erfindungsgemäße elektrische Maschine ist dadurch gekennzeichnet, dass der Querschnitt des Wälzkörpers ein Gleichdick ist. Mit der Erfindung, die eine neue Maschinenstruktur darstellt, ist es erstmals möglich auch die radiale Kraftkomponente zur Drehmomentbildung bzw. Vortriebskraftbildung zu nutzen. Der gleichdickförmige Wälzkörper kann zwischen zwei parallelen Linien mit festem Abstand hergestellt werden und bleibt bei beiden Orientierungen tangential. Somit ist eine schlupffreie Rollbewegung mit sehr geringen Verlusten möglich. Durch die Ausbildung der elektrischen Maschine mit Wälzkörpern als Gleichdick ist der überraschende Vorteil gegeben, dass verschiedene komplexe Bewegungsabläufe erzeugt werden können. Dadurch können auch verschiedene allgemeine Wälzkörperquerschnitte, etwa auch mit Ecken - im Falle eines dreieckigen Gleichdickes - verwendet werden, wodurch sich vielseitige Bahnkurven der beweglichen Teile erzeugen lassen. Die erfindungsgemäße elektrische Maschine bringt somit Vorteile, indem sie durch die neue Maschinenstruktur auch die radiale Komponente der Kraftbildung nutzt und vorzugsweise ohne Luftspalt ausgeführt wird. Eine verlustarme Bewegung zwischen dem mit Spulen ausgestatteten Teil der Maschine - ohne Beschränkung der Allgemeinheit "Stator" genannt, wobei im Prinzip eine rotierende oder translatorische Bewegung dieses Teils auch denkbar ist - und dem im allgemeinen bewegten Teil - ohne Beschränkung der Allgemeinheit "Rotor" oder bei linearen Anordnungen "Translator" genannt - erfolgt durch Wälzkörper, die simultan zwischen Stator und Rotor vorzugsweise formschlüssig abrollen. Als Wälzkörper sind alle Geometrien denkbar, die solch eine Wälzbewegung zwischen Stator und Rotor durchführen können. Als Beispiele werden kreisförmige Zylinder, Kugeln oder Gleichdicke genannt. Alle diese Wälzkörper und der Wälzpartner können mit Modifikationen entlang der Rollfläche ausgestattet sein, die einen Formschluss ermöglichen, wie etwa Ausführung mit Zähnen bei Zahnrädern oder Kreisabschnitten entlang der Oberfläche und an den Ecken von Gleichdicken und dergleichen.

Der Stator kann innen oder außen angeordnet sein. Auch eine Doppel- oder Mehrfachanordnung mit zwei oder mehreren Teilstatoren und einem Rotor, dazwischen zwei oder mehrere Wälzkörpersysteme, ist denkbar.

Die vorliegende Erfindung bietet weiters auch die Möglichkeit, dass die Wälzkörper weitere Funktionen übernehmen können, wie beispielsweise bewegte Kammern zum Transport oder zur Verdichtung bzw. Entspannung von flüssigen, pulverförmigen oder gasförmigen Medien analog von Pumpen oder Kompressoren oder die Übertragung von Normalkräften analog von Lagern, so dass Funktionen wie Pumpen, Komprimieren, Entspannen oder Lagerung etc. ohne zusätzliche Bauteile von den Wälzkörpern übernommen werden können. Die Anordnung kann auch mit einer Getriebefunktion ausgestattet werden, vorzugsweise als Planetengetriebe, mit zusätzlicher elektromagnetischer Erregung im Stator- bzw. Erregerteil.

Der Kern der Erfindung ist insbesondere darin zu sehen, dass ein magnetisches Feld, welches vorzugsweise vom Stator durch Spulenanordnungen erzeugt wird, durch entsprechende Ansteuerung der Spulen an geeigneter Stelle in die vorzugsweise magnetisch gut leitfähigen Wälzkörper eingeleitet wird und an geeigneter Stelle wieder den bzw. die Wälzkörper verlässt und sich im Stator rückschließt. Bei den Übergängen des magnetischen Feldes zwischen Wälzkörper und Stator wird eine Kraft erzeugt, die proportional zum Quadrat der Flussdichte ist und daher immer anziehend zwischen den beiden Körpern wirkt. Dadurch wird ein Drehmoment, auch als Wälzmoment bezeichnet, um den momentanen Abrollpunkt, also dem Berührungspunkt, zwischen den beiden Körpern erzeugt, das im motorischen Fall den Wälzkörper in Drehung versetzt. Dadurch wird elektrische Leistung entnommen und in mechanische Leistung umgeformt. Im generatorischen Fall wird der Wälzkörper durch externe Drehmoment- bzw. Krafteinleitung bewegt, wobei das Wälzmoment dann entgegen der Wälzdrehrichtung wirkt und damit Leistung in den elektrischen Kreis einspeist.

Gemäß einem besonderen Merkmal der Erfindung erfolgt die Übertragung des elektromagnetisch erzeugten Drehmomentes des Wälzkörpers bzw. der Wälzkörper, vorzugsweise formschlüssig, in den rotatorisch oder translatorisch beweglichen Maschinenteil. Dadurch ist eine schlupffreie Rollbewegung mit sehr geringen Verlusten möglich.

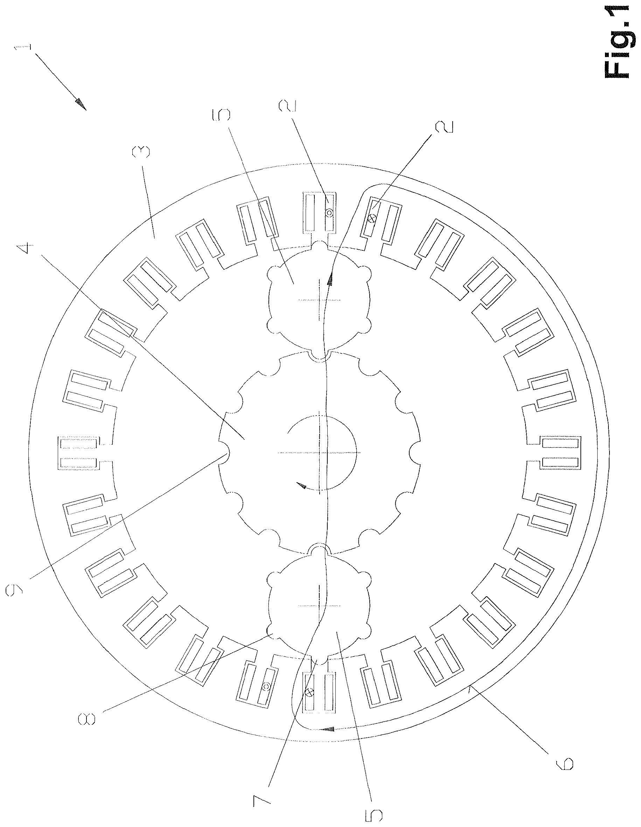

Die Abbildungen der Figuren 1, 2, 4, 5, 7, 10, 11, 12, 13 dargestellten Gegenstand der Erfindung fällt nicht unter die vorliegenden Ansprüche, sondern es handelt sich dabei um einen Stand der Technik.

Nach einem weiteren besonderen Merkmal der Erfindung ist ein Permanentmagnetsystem zur Vormagnetisierung des Systems, vorzugsweise in den Wälzkörpern, vorgesehen. Dadurch ist es möglich, den elektrischen Wirkungsgrad weiter zu verbessern, da die magnetisierende Blindleistung reduziert wird. Außerdem kann dadurch im generatorischen Betrieb ohne weitere Maßnahmen, wie etwa Leistungselektronik, eine Klemmenspannung erzeugt werden.

Gemäß einem ganz besonderen Merkmal der Erfindung erzeugt die Bestromung der Spulen die hohen Drehmomente in dem Wälzkörper, wobei die Flusspfade über den Wälzkörper führen. Dadurch kann eine hohe Drehmoment- oder Kraftausbeute bei gegebenem Volumen erzielt werden.

Nach einer weiteren Ausgestaltung der Erfindung erfolgt die Bestromung der Spulen in Abhängigkeit von der Stellung der Wälzkörper in Bezug auf den Spulen tragenden Maschinenteil, wobei die Stellung der Wälzkörper vorzugsweise über mathematische Modelle durch Auswerten von einfach zugänglichen elektrischen Größen nach bekannten Methoden des Standes der Technik erfolgt. Dadurch ist ähnlich dem Prinzip der Feldorientierung ein stabiler Betrieb bei gleichzeitig hoher Ausnutzung gewährleistet. Dabei wird Stellung der Wälzkörper entweder über direkte Messung oder vorzugsweise über mathematische Modelle, etwa über Induktivitätsauswertung, beispielsweise entsprechend dem INFORM-Verfahren gemäß der AT 406 722 B1, oder Auswertung der induzierten Spannung bestimmt.

Die Bestromung der Spulen kann gesteuert erfolgen, vorzugsweise gemäß einer Zeitfunktion. Dadurch ist eine sehr kostengünstige Realisierung, etwa direkt am Drehstromnetz ohne aufwändige Elektronik, möglich.

Nach einer weiteren Ausgestaltung der Erfindung weist die elektrische Maschine eine Kombination von verschieden gekrümmten Bahnkurvenabschnitten der Wälzkörper, vorzugsweise eine Kombination von linearen und von kreisförmigen Bahnabschnitten, auf. Dadurch kann beispielsweise eine Bahnkurve eines Transportbandes realisiert werden, wo die Wälzkörper sowohl die Lagerung als auch die Kraftübertragung übernehmen.

Die Erfindung wird an Hand von Ausführungsbeispielen, die in der Zeichnung dargestellt sind, näher erläutert.

Es zeigen:
Fig. 1 in schematischer Darstellung eine elektrische Maschine als klassischer Innenläufer,
Fig. 2 ein Detail einer formschlüssigen Verbindung zwischen Wälzkörper und einem Maschinenteil,
Fig. 3 in schematischer Darstellung eine elektrische Maschine als Außenläufer mit permanenterregten Wälzkörpern,
Fig. 4 in schematischer Darstellung eine elektrische Maschine als Außenläufer mit Zusatzfunktionen,
Fig.5 einen Schnitt durch die Maschine gemäß Fig. 4,
Fig. 6 in schematischer Darstellung eine elektrische Maschine als Linearmotor,
Fig. 7 in schematischer Darstellung eine elektrische Maschine als Innenläufer mit komplexeren Wälzkörpern in Planetenrad-Anordnung,
Fig. 8 eine Draufsicht auf die Maschine gemäß Fig. 7,
Fig. 9 in schematischer Darstellung eine elektrische Maschine gemäß Fig. 7 mit Beidseitiger Planetenrad-Anordnung,
Fig. 10 in schematischer Darstellung eine elektrische Maschine mit einem linear beweglichen Maschinenteil,
Fig. 11 in schematischer Darstellung eine elektrische Maschine mit einem ringförmigen, beweglichen Maschinenteil und
Fig. 12 und 13 in schematischer Darstellung eine elektrische Maschine bei der der bewegliche Maschinenteil ein Riemen ist.

Gemäß der Fig. 1 ist eine elektrische Maschine 1 gezeigt, die aus einem mit Spulen 2 ausgestatteten Maschinenteil 3 und einem rotatorisch beweglichen Maschinenteil 4 besteht. Zwischen dem mit Spulen 2 ausgestatteten Maschinenteil 3 und dem beweglichen Maschinenteil 4 sind Wälzkörper 5 angeordnet. Diese Wälzkörper 5 führen mindestens zeitweise einen magnetischen Fluss, welcher sich über den Wälzkörper 5 zu dem mit Spulen 2 ausgestatteten Maschinenteil 3 rückschließt. Der magnetische Fluss ist durch die Feldlinie 6 angedeutet. Der Magnetische Fluss erzeugt um den aktuellen Abrollpunkt 7 des Wälzkörpers 5 am mit Spulen 2 ausgestatteten Maschinenteil 3 ein - wie noch später eingehend aufgezeigt wird - Drehmoment des Wälzkörpers 5.

Die Übertragung des elektromagnetisch erzeugten Drehmomentes der Wälzkörper 5 erfolgt formschlüssig in den rotatorisch beweglichen Maschinenteil 4. Natürlich ist es auch denkbar, die Übertragung des Drehmomentes in kraftschlüssiger Form durchzuführen.

Der Querschnitt der Wälzkörper 5 ist - im dargestellten Fall - ein Kreis, dessen äußere Abrollfläche zur Herstellung eines Formschluss mit im Querschnitt halbkreisförmigen Längserhebungen 8 versehen ist. Diese Längserhebungen 8 greifen formschlüssig in korrespondierende Vertiefungen 9 im beweglichen Maschinenteil 4 ein. Natürlich könnte die Abrollfläche auch andere Modifikationen, wie beispielsweise zahnähnliche Erhebungen aufweisen. Als Wälzkörper 5 sind alle Geometrien denkbar, die solch eine Wälzbewegung zwischen den Maschinenteilen 3, 4, also zwischen Stator und Rotor, durchführen können. Als Beispiele werden kreisförmige Zylinder, Kugeln oder Gleichdicke genannt. Alle diese Wälzkörper 5 und der Wälzpartner können mit Modifikationen entlang der Rollfläche ausgestattet sein, die einen Formschluss ermöglichen, wie etwa Ausführung mit Zähnen bei Zahnrädern oder Kreisabschnitten entlang der Oberfläche und an den Ecken von Gleichdicken und dergleichen.

Eine Verwendung der elektrischen Maschine 1 sowohl als Motor, wie auch als Generator versteht sich von selbst. Dabei kann der Stator innen oder außen angeordnet sein. Auch eine Doppel- oder Mehrfachanordnung mit zwei oder mehreren Teilstatoren und einem Rotor, dazwischen zwei oder mehrere Wälzkörpersysteme ist denkbar.

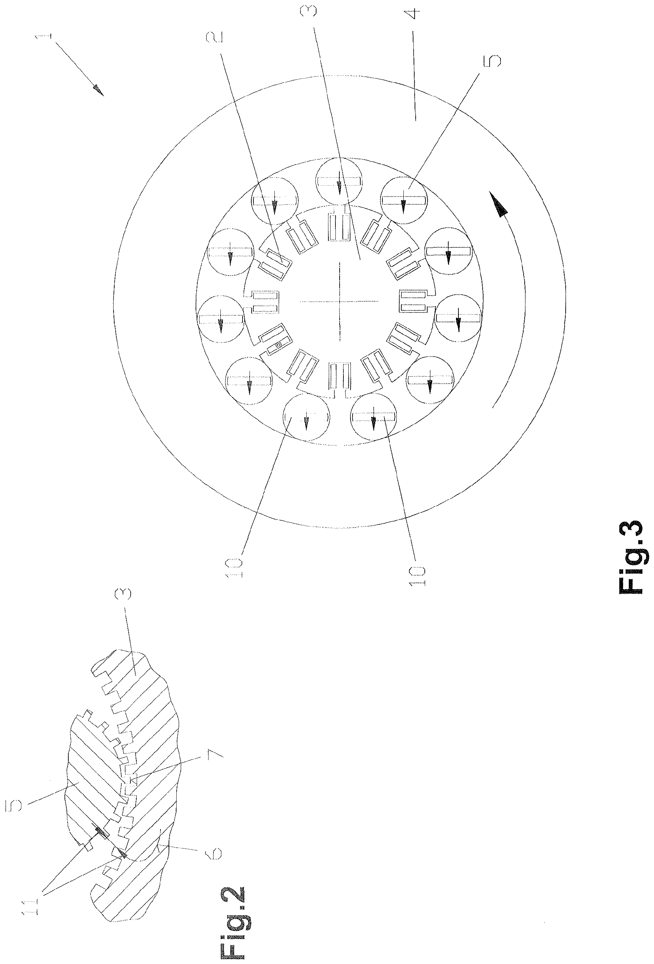

Gemäß der Fig. 2 wird der Grundgedanke dieses Funktionsprinzips dargelegt. Der Grundgedanke ist, dass ein magnetisches Feld, welches vorzugsweise vom Maschinenteil 3, dem Stator, durch Spulenanordnungen erzeugt wird, durch entsprechende Ansteuerung der Spulen an geeigneter Stelle in die vorzugsweise magnetisch gut leitfähigen Wälzkörper 5 eingeleitet wird und an geeigneter Stelle wieder den bzw. die Wälzkörper 5 verlässt und sich im Stator rückschließt. Bei den Übergängen des magnetischen Feldes - angedeutet durch die Feldlinie 6 - zwischen Wälzkörper 5 und Stator wird eine Kraft - angedeutet durch die Pfeile 11 - erzeugt, die proportional zum Quadrat der Flussdichte ist und daher immer anziehend zwischen den beiden Körpern wirkt. Dadurch wird ein Drehmoment, auch zu bezeichnen als Wälzmoment, um den momentanen Abrollpunkt 7, dem Berührungspunkt zwischen den beiden Körpern, erzeugt, der im motorischen Fall den Wälzkörper 5 in Drehung versetzt. Dadurch wird elektrische Leistung entnommen und in mechanische Leistung umgeformt. Im generatorischen Fall wird der Wälzkörper 5 durch externe Drehmoment- bzw. Krafteinleitung bewegt, wobei das Wälzmoment dann entgegen der Wälzdrehrichtung wirkt und damit Leistung in den elektrischen Kreis einspeist.

Gemäß der Fig. 3 ist in schematischer Darstellung eine elektrische Maschine 1 als Außenläufer mit permanenterregten Wälzkörpern gezeigt. Der mit Spulen 2 ausgestattete Maschinenteil 3 ist als Stator innen vorgesehen, um den sich der rotatorisch bewegliche Maschinenteil 4 bewegt. Zwischen dem mit Spulen 2 ausgestatteten Maschinenteil 3 und dem beweglichen Maschinenteil 4 sind die Wälzkörper 5 angeordnet. Dabei ist ein Permanentmagnetsystem 10 zur Vormagnetisierung des Systems in den Wälzkörpern 5 vorgesehen. Eine Verbesserung des Wirkungsgrades ist die Folge, da die magnetisierende Blindleistung reduziert wird. Außerdem kann dadurch im generatorischen Betrieb ohne weitere Maßnahmen, wie etwa Leistungselektronik, eine Klemmenspannung erzeugt werden.

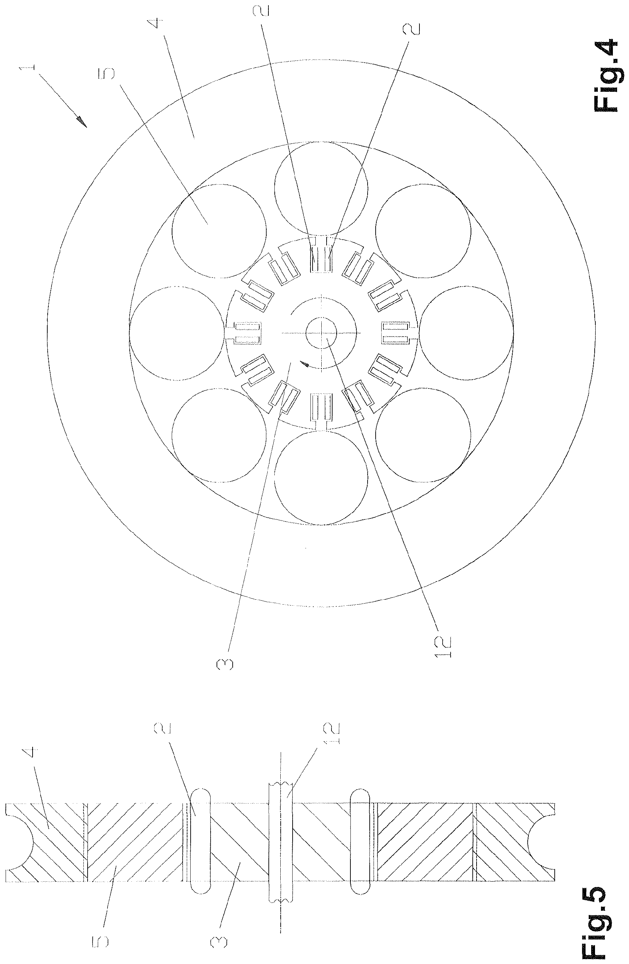

Gemäß der Fig. 4 und 5 ist in schematischer Darstellung eine elektrische Maschine 1 als Außenläufer mit Zusatzfunktionen gezeigt. Der mit Spulen 2 versehene Maschinenteil 3 ist innen vorgesehen und der bewegliche Maschinenteil 4 außen. Zwischen beiden Maschinenteilen 3, 4 sind die Wälzkörper 5 angeordnet. Zentrisch im innen vorgesehenen Maschinenteil 3, dem Stator, ist eine Welle 12 vorgesehen. Als Zusatzfunktionen ist einerseits eine Lagerung gegeben und anderseits übernimmt der bewegliche Maschinenteil 4 die Funktion einer Treibrolle.

Wie eingangs bereits erwähnt, bietet die elektrische Maschine 1 auch die Möglichkeit, dass die Wälzkörper 5 weitere Funktionen übernehmen können, wie beispielsweise bewegte Kammern zum Transport oder zur Verdichtung bzw. Entspannung von flüssigen pulverförmigen oder gasförmigen Medien analog von Pumpen oder Kompressoren oder die Übertragung von Normalkräften analog von Lagern, sodass Funktionen wie Pumpen, Komprimieren, Entspannen oder Lagerung etc. ohne zusätzliche Bauteile von den Wälzkörpern 5 übernommen werden können. Die Anordnung kann auch mit einer Getriebefunktion ausgestattet werden, vorzugsweise als Planetengetriebe ausgeführte Teile mit zusätzlicher elektromagnetischer Erregung im Stator- bzw. Erregerteil.

Entsprechend einer Weiterbildung könnten aber auch die Wälzkörper 5 drehbar mit einem Sonnen- und/oder einem Planetenrad verbunden sein.

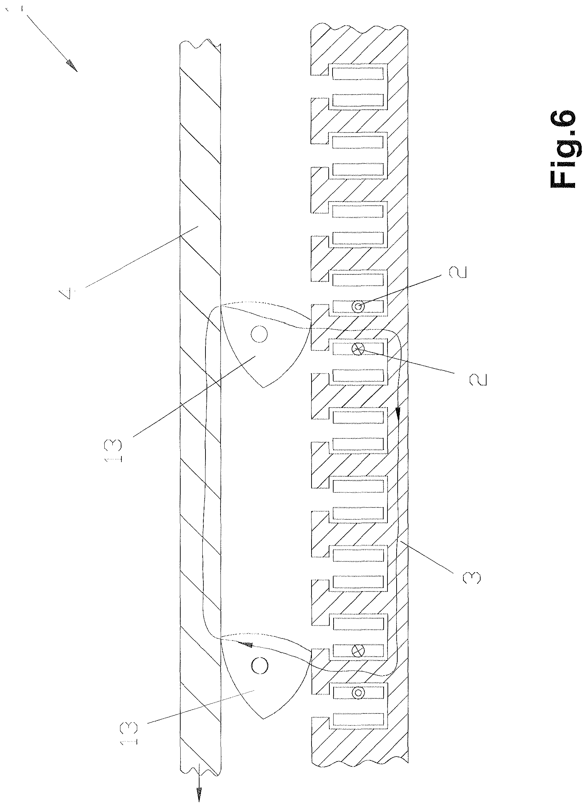

Gemäß der Fig. 6 ist in schematischer Darstellung eine elektrische Maschine 1 als Linearmotor gezeigt. Die elektrische Maschine 1 besteht aus einem mit Spulen 2 ausgestatteten Maschinenteil 3 und einem translatorisch beweglichen Maschinenteil 4. Zwischen dem mit Spulen 2 ausgestatteten Maschinenteil 3 und dem beweglichen Maschinenteil 4 sind Wälzkörperbauteile in Form von Gleichdicks 13 angeordnet.

Natürlich ist es auch denkbar, dass die elektrische Maschine 1 eine Kombination von verschieden gekrümmten Bahnkurvenabschnitten der Wälzkörper 5, vorzugsweise eine Kombination von linearen und von kreisförmigen Bahnabschnitten, aufweist.

Einer besonderen Bedeutung ist der Bestromung der Spulen 2 beizumessen. Die Bestromung der Spulen 2 erzeugt die hohen Drehmomente in den Wälzkörpern 5, wobei die Flusspfade über die einzelnen Wälzkörper 5 führen. Ferner kann die Bestromung der Spulen 2 in Abhängigkeit von der Stellung der Wälzkörper 5 in Bezug auf den Spulen 2 tragenden Maschinenteil 3 erfolgen, wobei die Stellung der Wälzkörper 5 vorzugsweise über mathematische Modelle durch Auswerten von einfach zugänglichen elektrischen Größen nach bekannten Methoden des Standes der Technik erfolgt.

Eine weitere Möglichkeit ist darin zu sehen, dass die Bestromung der Spulen 2 über eine Steuerung gemäß einer Zeitfunktion erfolgt. Auch die Bestromung der Spulen 2 über mechanische Schleifkontakte ist im Bereich des Möglichen. Ebenso kann die Bestromung der Spulen 2 über leistungselektronische Schalter erfolgen, die von einer elektronischen Steuerung angesteuert werden.

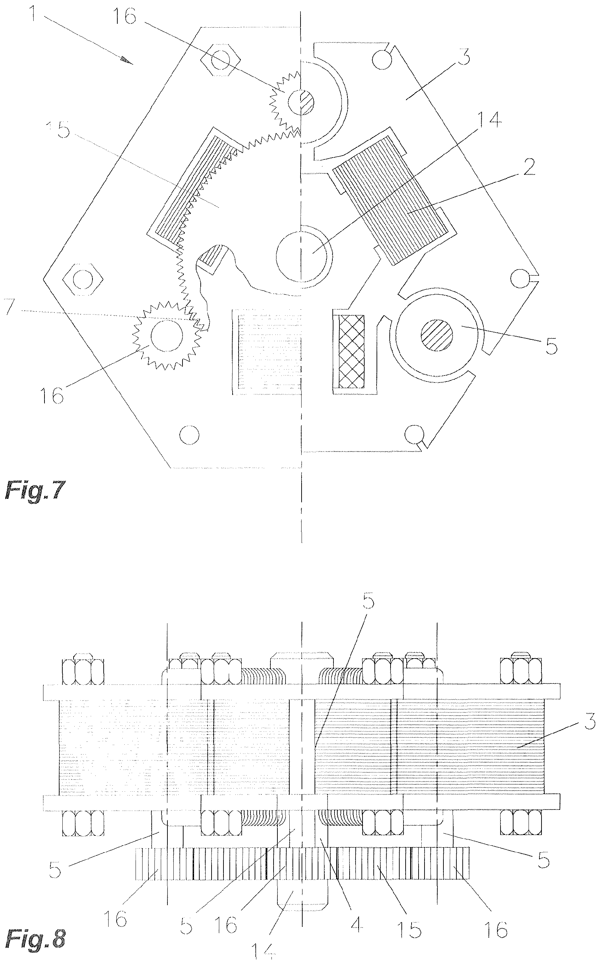

In den Fig. 7 bis 13 sind weitere besondere Ausführungsvarianten der elektrischen Maschine 1 beispielhaft aufgezeigt, wobei die prinzipielle Funktionsweise aus der Beschreibung zu den vorhergehenden Fig. 1 bis 6, insbesondere zur Fig. 1 und Fig. 2, zu entnehmen ist.

Gemäß der Fig. 7 ist eine elektrische Maschine 1 als Innenläufer mit komplexeren Wälzkörpern 5 in einer Planetenrad-Anordnung dargestellt, wobei die Fig. 8 eine Draufsicht auf die Fig. 7 ist.

Diese elektrische Maschine 1 besteht aus dem mit Spulen 2 ausgestatteten Maschinenteil 3 und dem rotatorisch beweglichen Maschinenteil 4, wobei dieser rotatorisch bewegliche Maschinenteil 4 als Welle 14, mit einem Sonnenrad 15 versehen, ausgeführt ist. Die Welle 14 ragt seitlich aus dem Maschinenteil 3 heraus. Zwischen dem mit Spulen 2 ausgestatteten Maschinenteil 3 und dem beweglichen Maschinenteil 4 sind die Wälzkörper 5 angeordnet. Diese Wälzkörper 5 weisen an einem Wellenende Planetenräder 16 auf, die mit dem Sonnenrad im Eingriff sind. Der aktuelle Abrollpunkt 7 ist somit praktisch aus der Maschine 1 seitlich heraus gelegt. Die Wälzkörper 5 führen auch in diesem Fall mindestens zeitweise einen magnetischen Fluss, welcher sich über den Wälzkörper 5 zu dem mit Spulen 2 ausgestatteten Maschinenteil 3 rückschließt. Der magnetische Fluss erzeugt um den aktuellen Abrollpunkt 7 ein Drehmoment des Wälzkörpers 5.

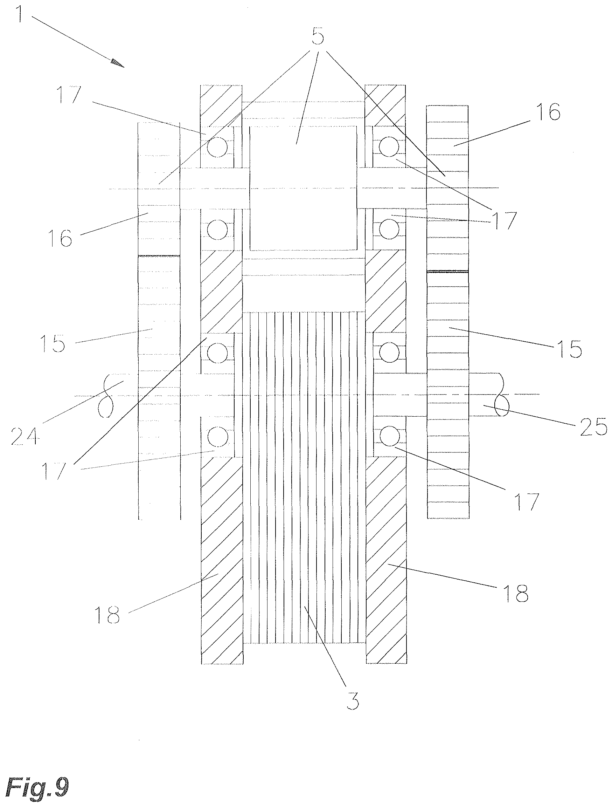

Gemäß der Fig. 9 ist eine elektrische Maschine 1 als Innenläufer gezeigt, die beidseitig des Maschinenteiles 3 Planetengetriebe-Anordnungen aufweist. Den beweglichen Maschinenteil 4 bilden somit die Wellen 24, 25 mit den beidseitig angeordneten Sonnenrädern 15. Sowohl die Wellen 24, 25 mit ihren Sonnenrädern 15 als auch die mit Planetenrädern 16 bestückten Wellenenden der Wälzkörper 5 sind in Lagern 17 des Maschinengehäuses 18 gelagert. Durch die entsprechende Wahl des Durchmessers vom Sonnenrad 15 zum Durchmesser des Planetenrades 16 wird das Übersetzungsverhältnis des Getriebes festgelegt.

Als Beispiel kann aufgezeigt werden, dass ausgehend von der Anordnung gemäß der Fig. 9 die Wälzkörper 5 linksseitig mit einer Planetengetriebestufe und einem frei definierten Übersetzungsverhältnis und einem rechts mit einer Planetengetriebestufe, deren Übersetzungsverhältnis ebenfalls frei definiert werden kann, ausgestattet sind. Somit ist ein zweistufiges Planetengetriebe mit integrierter Elektromaschinenfunktion mit sehr komplexen Leistungsflüssen möglich. Jeder der drei Leistungseingänge - mechanisch links, mechanisch rechts, elektrischer Anschluss Mitte - kann prinzipiell motorisch oder generatorisch betrieben werden.

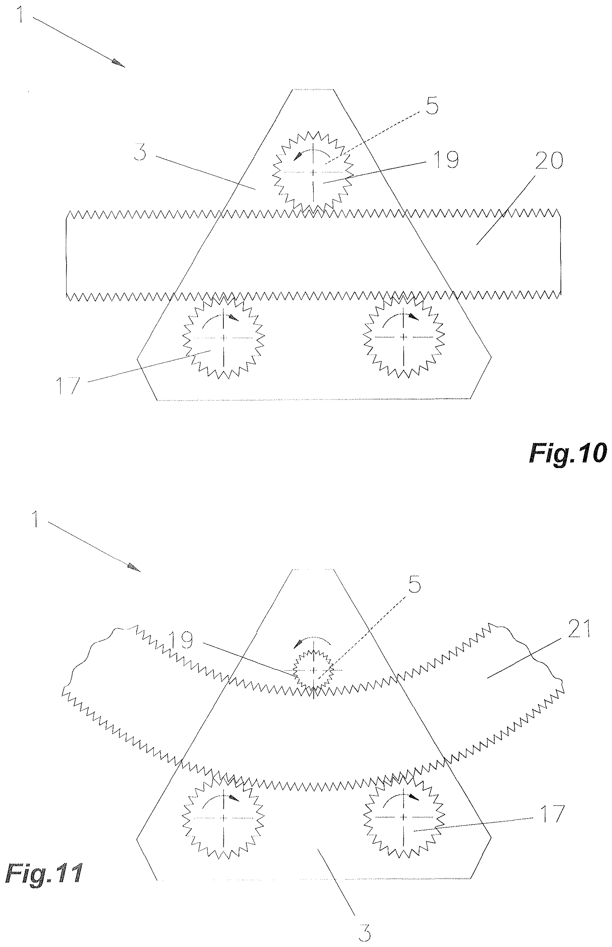

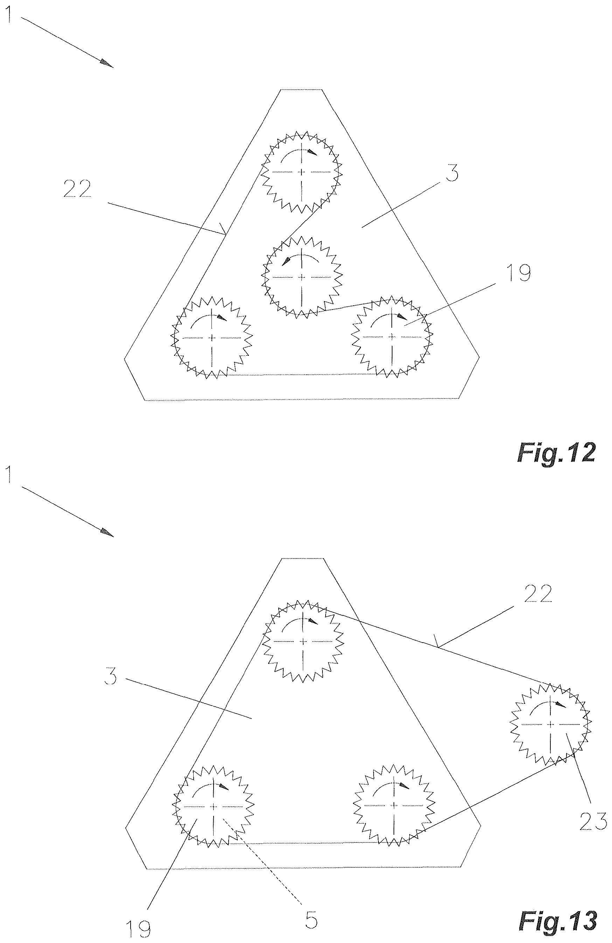

Gemäß der Fig. 10 ist eine elektrische Maschine 1 mit einem linear beweglichen Maschinenteil 4 und gemäß Fig. 11 eine elektrische Maschine 1 mit einem ringförmigen beweglichen Maschinenteil 4 aufgezeigt. Dabei sind die Wälzkörper 5 im Maschinenteil 3 angeordnet und gelagert. An mindestens einem Wellenende ist ein Zahnrad 19 vorgesehen, das beispielsweise in die Zähne einer Zahnstange 20, die den beweglichen Maschinenteil 4 bildet, eingreift. Gemäß der Fig. 11 ist der bewegliche Maschinenteil 4 als mit Zähnen versehener Ring 21 ausgeführt. Gemäß der Fig. 12 und der Fig. 13 ist eine elektrische Maschine 1, bei der der bewegliche Maschinenteil ein Riemen 22 ist, gezeigt. Wie dargelegt, kann der bewegliche Maschinenteil 4 auch als Riemen 22, gegebenenfalls wie in Fig. 12 als beidseitig gezahnter Zahnriemen, ausgeführt werden, dessen Riemenkraft konzentrisch (Fig. 12) oder exzentrisch (Fig. 13) in eine Abtriebs- bzw. Umlenkwelle 23 eingeleitet werden kann. Natürlich kann dieser Riemen 22 auch durch eine Kette o. dgl. ersetzt werden. Auch in dieser Ausführung sind die Wälzkörper 5 im Maschinenteil 3 angeordnet und gelagert. An mindestens einem Wellenende der Wälzkörper 5 ist ein Zahnrad 19 vorgesehen, das beispielsweise in den Riemen 22 oder die Kette, die den beweglichen Maschinenteil 4 bildet, eingreift.

## Patentansprüche

1. Elektrische Maschine, die aus einem mit Spulen (2) ausgestatteten Maschinenteil (3) und einem rotatorisch oder translatorisch beweglichen Maschinenteil (4) besteht, wobei zwischen dem mit Spulen (2) ausgestatteten Maschinenteil (3) und dem beweglichen Maschinenteil (4) mindestens ein Wälzkörper (5) angeordnet ist, der mindestens zeitweise einen magnetischen Fluss führt, welcher sich über den Wälzkörper (5) zu dem mit Spulen (2) ausgestatteten Maschinenteil (3) rückschließt und um den aktuellen Abrollpunkt (7) des Wälzkörpers (5) am mit Spulen (2) ausgestatteten Maschinenteil (3) ein Drehmoment des Wälzkörpers (5) erzeugt, wobei die elektrische Maschine Formschluss herstellende Modifikationen der Abrollfläche des Wälzkörpers aufweist, wobei die Übertragung des elektromagnetisch erzeugten Drehmomentes der Wälzkörper (5) formschlüssig in den rotatorisch oder translatorisch beweglichen Maschinenteil (4) erfolgt, **dadurch gekennzeichnet, dass** der Querschnitt des Wälzkörpers (5) ein Gleichdick (13) ist.

2. Elektrische Maschine nach Anspruch 1, **dadurch gekennzeichnet, dass** ein Permanentmagnetsystem (10) des Systems, vorzugsweise in den Wälzkörpern (5), vorgesehen ist.

3. Elektrische Maschine nach Anspruch 1 oder 2, **dadurch gekennzeichnet, dass** die Bestromung der Spulen (2) die hohen Drehmomente in dem Wälzkörper (5) erzeugt, wobei die Flusspfade über den Wälzkörper (5) führen und die Bestromung der Spulen (2) gegebenenfalls gesteuert, vorzugsweise gemäß einer Zeitfunktion, erfolgt.

4. Elektrische Maschine nach mindestens einem der Ansprüche 1 bis 3, **dadurch gekennzeichnet, dass** die Bestromung der Spulen (2) in Abhängigkeit von der Stellung der Wälzkörper (5) in Bezug auf den Spulen (2) tragenden Maschinenteil (3) erfolgt, wobei die Stellung der Wälzkörper (5) vorzugsweise über mathematische Modelle durch Auswerten von einfach zugänglichen elektrischen Größen nach bekannten Methoden des Standes der Technik erfolgt.

5. Elektrische Maschine nach mindestens einem der Ansprüche 1 bis 4, **dadurch gekennzeichnet, dass** die Bestromung der Spulen (2) über mechanische Schleifkontakte erfolgt.

6. Elektrische Maschine nach mindestens einem der Ansprüche 1 bis 5, **dadurch gekennzeichnet, dass** die Bestromung der Spulen (2) über, von einer elektronischen Steuerung angesteuerte, leistungselektronische Schalter erfolgt.

7. Elektrische Maschine nach mindestens einem der Ansprüche 1 bis 6, **dadurch gekennzeichnet, dass** die Maschine (1) als Motor betrieben wird.

8. Elektrische Maschine nach mindestens einem der Ansprüche 1 bis 7, **dadurch gekennzeichnet, dass** die Maschine (1) als Generator betrieben wird.

9. Elektrische Maschine nach mindestens einem der Ansprüche 1 bis 8, **dadurch gekennzeichnet, dass** die elektrische Maschine (1) mindestens eine zusätzliche Funktion, wie beispielsweise Pumpen, Turbinieren, Verdichten, Entspannen, Lagerung, Getriebe, Transportband etc. übernimmt.

10. Elektrische Maschine nach mindestens einem der Ansprüche 1 bis 9, **dadurch gekennzeichnet, dass** der Wälzkörper (5) bzw. die Wälzkörper drehbar mit einem Sonnen- und/oder einem Planetenrad verbunden ist bzw. sind.

11. Elektrische Maschine nach mindestens einem der Ansprüche 1 bis 10, **dadurch gekennzeichnet, dass** die elektrische Maschine (1) eine Kombination von verschieden gekrümmten Bahnkurvenabschnitten, vorzugsweise eine Kombination von linearen und von kreisförmigen Bahnabschnitten, aufweist.

## Claims

1. Electric machine consisting of a machine part (3) equipped with coils (2) and a machine part (4) movable in rotation or translation, wherein at least one rolling element (5) is provided between the machine part (3) equipped with coils (2) and the movable machine part (4), which rolling element at least temporarily conducts a magnetic flux that returns via the rolling element (5) to the machine part (3) equipped with coils (2) and generates a torque of the rolling element (5) around the current rolling point (7) of the rolling element (5) on the machine part (3) equipped with coils (2), wherein the electric machine comprises form-fitting modifications of the rolling surface of the rolling element (5), wherein the electromagnetically generated torque of the rolling elements (5) is transmitted in a form-fitting manner into the machine part (4) movable in rotation or translation, **characterized in that** the cross-section of the rolling element (5) is a curve of constant width (13).

2. Electric machine according to claim 1, **characterized in that** a permanent magnet system (10) of the system is provided, preferably in the rolling elements (5).

3. Electric machine according to claim 1 or 2, **characterized in that** the current feed to the coils (2) generates the high torques in the rolling element (5), wherein the flux paths traverse the rolling element (5) and the current feed to the coils (2) is optionally controlled, preferably according to a time function.

4. Electric machine according to at least one of claims 1 to 3, **characterized in that** the current is fed to the coils (2) as a function of the position of the rolling elements (5) in relation to the machine part (3) carrying the coils (2), wherein the positioning of the rolling elements (5) is preferably effected via mathematical models by evaluating easily accessible electrical parameters according to methods per se known from the state of the art.

5. Electric machine according to at least one of claims 1 to 4, **characterized in that** the current is fed to the coils (2) via mechanical sliding contacts.

6. Electric machine according to at least one of claims 1 to 5, **characterized in that** the current is fed to the coils (2) via electronic power switches controlled by an electronic controller.

7. Electric machine according to at least one of claims 1 to 6, **characterized in that** the machine (1) is being operated as a motor.

8. Electric machine according to at least one of claims 1 to 7, **characterized in that** the machine (1) is being operated as a generator.

9. Electric machine according to at least one of claims 1 to 8, **characterized in that** the electric machine (1) performs at least one additional function, e.g. as a pump, turbine, compressor, pressure reducer, storage, transmission, conveyor belt, etc.

10. Electric machine according to at least one of claims 1 to 9, **characterized in that** the rolling element (5) or the rolling elements is or are, respectively, rotatably connected to a sun and/or a planet wheel.

11. Electric machine according to at least one of claims 1 to 10, **characterized in that** the electric machine (1) comprises a combination of differently curved trajectory sections, preferably a combination of linear and circular trajectory sections.

## Revendications

1. Machine électrique, qui se compose d'une pièce de machine (3) équipée de bobines (2) et d'une pièce de machine mobile (4) en rotation ou en translation, au moins un élément roulant (5) étant disposé entre la pièce de machine (3) équipée de bobines (2) et la pièce de machine mobile (4), qui provoque au moins sporadiquement un flux magnétique, qui se referme par le biais de l'élément roulant (5) de la pièce de la machine (3) équipée de bobines (2) et qui génère un couple de l'élément roulant (5) autour du point de déroulement actuel (7) de l'élément roulant (5) sur la pièce de la machine (3) équipée de bobines (2), la machine électrique comportant des modifications réalisant la fermeture géométrique de la surface de déroulement de l'élément roulant (5), la transmission du couple généré électromagnétiquement de l'élément roulant (5) étant effectuée mécaniquement dans la pièce de la machine mobile (4) en rotation ou en translation, **caractérisée par le fait que** la section transversale de l'élément roulant (5) est un orbiforme (13).

2. Machine électrique selon la revendication 1, **caractérisée par le fait qu'**un système à aimant permanent (10) du système est prévu de préférence dans les éléments roulants (5).

3. Machine électrique selon la revendication 1 ou 2, **caractérisée par le fait que** l'alimentation en courant des bobines (2) génère les couples élevés dans l'élément roulant (5), les chemins de flux passant par l'élément roulant (5) et l'alimentation en courant des bobines (2) étant, le cas échéant, activée de préférence par une fonction de minuterie.

4. Machine électrique selon au moins une des revendications 1 à 3, **caractérisée par le fait que** l'alimentation en courant des bobines (2) est effectuée en fonction de la position de l'élément roulant (5) par rapport à la pièce de la machine (3) portant les bobines (2), le positionnement de l'élément roulant (5) étant de préférence effectué au moyen de modèles mathématiques par évaluation de grandeurs électriques facilement accessibles selon des méthodes connues de l'état de la technique.

5. Machine électrique selon au moins une des revendications 1 à 4, **caractérisée par le fait que** l'alimentation en courant des bobines (2) est effectuée par le biais de contacts mécaniques à frottement.

6. Machine électrique selon au moins une des revendications 1 à 5, **caractérisée par le fait que** l'alimentation en courant des bobines (2) est effectuée par le biais de sectionneurs de puissance électroniques contrôlés par une commande électronique.

7. Machine électrique selon au moins une des revendications 1 à 6, **caractérisée par le fait que** la machine (1) est exploitée comme moteur.

8. Machine électrique selon au moins une des revendications 1 à 7, **caractérisée par le fait que** la machine (1) est exploitée comme génératrice.

9. Machine électrique selon au moins une des revendications 1 à 8, **caractérisée par le fait que** la machine électrique (1) assume au moins une fonction supplémentaire, comme par exemple le pompage, le turbinage, la compression, la détente, le stockage, la transmission, la bande transporteuse, etc.

10. Machine électrique selon au moins une des revendications 1 à 9, **caractérisée par le fait que** le ou les éléments roulants (5) sont reliés de manière orientable avec une roue solaire et/ou une roue planétaire.

11. Machine électrique selon au moins une des revendications 1 à 10, **caractérisée par le fait que** la machine électrique (1) comporte une combinaison de sections de trajectoires à courbes variables, de préférence une combinaison de sections de trajectoires linéaires et circulaires.
